# EUROPÄISCHE PATENTSCHRIFT

(11) **EP 0 401 535 B1**
(45) Veröffentlichungstag und Bekanntmachung des Hinweises auf die Patenterteilung: **10.03.1993**
(21) Anmeldenummer: 90108772.6
(22) Anmeldetag: 10.05.1990
(51) Int. Cl.: C02F 1/42, B01J 47/02

(54) **Vorrichtung zur Wasserbehandlung**
Water treatment device
Appareil pour le traitement d'eau

(30) Priorität: 07.06.1989 DE 3918561
(43) Veröffentlichungstag der Anmeldung: 12.12.1990
(73) Patentinhaber: Brita Wasser-Filter-Systeme GmbH, D-65232 Taunusstein-Neuhof (DE)
(72) Erfinder: Belz, Rolf, D-6209 Hohenstein-Breithardt (DE); Conradt, Berthold, D-6200 Wiesbaden-Erbenheim (DE)
(74) Vertreter: Weber, Dieter, Dr.

(56) Entgegenhaltungen:
- FR-A- 1 341 289
- FR-A- 1 556 197
- FR-A- 2 318 666
- US-A- 2 935 194

## Beschreibung

Vorrichtungen zur Wasserbehandlung, insbesondere zur Entkarbonisierung und Entchlorung in Haushalt und Gewerbebetrieben, sind in unterschiedlichen Formen bekannt. Kleinere Geräte für Haushaltszwecke bestehen vielfach aus einer Kanne, auf der ein Trichter mit einer in die Kanne ragenden, das Behandlungsmittel enthaltenden Hülse aufsetzbar ist. Das zu enthärtende Wasser wird in den Trichter eingegossen und läuft durch die Hülse in die Kanne. In der Hülse oder anstelle derselben kann eine austauschbare Patrone vorgesehen sein, die das Wasserbehandlungsmittel enthält.

Als Wasserbehandlungsmittel zur Entkarbonisierung des Wassers wird in erster Linie üblicherweise ein schwach saurer Kationensaustauscher verwendet, wie ein solcher auf Polyacrylatbasis, um insbesondere einen wesentlichen Teil der Erdalkalikationen gegen Alkali- oder Wasserstoffionen auszutauschen. Zusätzlich können in der Wasserbehandlungsvorrichtung noch Anionenaustauscher oder Adsorptionsmittel, wie Aktivkohle, zur Entfernung von Chlor und anderer Verunreinigungen enthalten sein. Außerdem können die Füllungen der Wasserbehandlungsvorrichtung Entkeimungsmittel, wie Silber oder Silberverbindungen, enthalten. Ein Problem in der Vergangenheit bestand darin, daß man den Ionenaustauscher nach bestimmter Benutzungsdauer austauschen muß, da er nach einer bestimmten Durchlaufmenge, die je nach der Härte und Verunreinigungen des Wassers variieren kann, erschöpft ist. Der Erschöpfungszustand läßt sich aber dem Ionenaustauscher nicht ansehen. Der Austausch erfolgt entweder durch Entleerung der Hülse und Neufüllung aus einem Nachfüllbeutel oder besser durch Austausch einer Patrone, die den Ionenaustauscher enthält.

Es ist zwar bekannt, auf Ionenaustauschern Farbindikatoren zu binden, die bei einem bestimmten pH-Wert einen Farbumschlag ergeben, doch ergeben die für die Wasserentkarbonisierung erforderlichen schwach sauren Kationenaustauscher im pH-Bereich der Erschöpfung des Ionenaustauschers keinen deutlichen Farbumschlag, der als Anzeige für den notwendig gewordenen Austausch verwendet werden könnte, oder die Indikatoren lassen sich nicht auf dem Ionenaustauscher fixieren.

Die FR-A-1 341 289 beschreibt eine Vorrichtung zur Wasserbehandlung mit einer Kationenaustauscher enthaltenden kleinen Kolonne, die in Reihe mit einem Hauptionenaustauschersystem im Bereich von deren Austrittsöffnung verbunden ist, und mit einer weiteren kleinen Kolonnen, die einen mit Farbindikator behandelten Anionenaustauscher enthält und mit der ersten kleinen Kolonne in Reihe verbunden ist. Die US-A-2 935 194 zeigt eine Vorrichtung zur Wasserbehandlung, die Kationenaustauscher und Anionenaustauscher sowie vor der Austrittsöffnung eine Schicht eines Anionenaustauschers mit daran gebundenem Farbindikator enthält. In beiden Vorrichtungen wird der Indikator vom Hauptflud des behandelten Wassers durchflossen.

Die der Erfindung zugrundeliegende Aufgabe bestand somit darin, bei Vorrichtungen zur Wasserbehandlung mit einem schwach sauren und/oder schwach basichen Kationenaustauscher ein Mittel zu finden, das ausreichend deutlich optisch anzeigt, wenn der Ionenaustauscher so weit erschöpft ist, daß er durch frischen ersetzt werden muß.

Erfindungsgemäß wird diese Aufgabe mit einer Vorrichtung zur Wasserbehandlung mit den Merkmalen des Anspruches 1 gelöst. Die bezeichnete Kammer im Bereich der Austrittsöffnung der Hülse braucht nur eine im Vergleich mit der Menge des schwach sauren und/oder schwach basischen Ionenaustauschers in der Hülse geringe Menge an stark saurem oder stark basischem Ionenaustauscher zu enthalten, da sich gezeigt hat, daß im Hinblick auf die Resthärte des in der Hülse entkarbonisierten Wassers, von dem Anteile in die Kammer eindringen, der stark saure oder stark basische Ionenaustauscher dann in seiner Gesamtheit bei dem an ihn gebundenen Farbindikator einen Farbumschlag ergibt, wenn der schwach saure bzw. schwach basische Ionenaustauscher in der Hülse verbraucht ist. Der Farbumschlag des an den stark sauren bzw. stark basischen Ionenaustauscher gebundenen Farbindikators kann im Bereich der flüssigkeitsdurchlässigen Trennung zwischen dem Inneren der Hülse und der Kammer schon relativ frühzeitig beginnen und sich nach und nach zu dem von der Hülse abgewandten Ende der Kammer fortsetzen. Der Erschöpfungszustand ist erreicht, wenn an dem abgewandten Ende der Farbumschlag erfolgt ist. Aus diesem Grund ist es zweckmäßig, daß die Kammer wenigstens in dem Bereich aus einem durchsichtigen Material besteht, der von der Ionenaustauscherfüllung in der Hülse abgewandt ist, da der Farbumschlag in diesem Bereich das Kriterium für den erforderlichen Austausch in der Hülse ist.

Da alle Vorrichtungen zur Wasserbehandlung gewöhnlich aus einem Kunststoffmaterial bestehen, kann man hierfür entweder insgesamt oder auch nur für das kritische Ende der Kammer ein durchsichtiges Kunststoffmaterial verwenden.

Wenn hier von einer Vorrichtung zur Wasserbehandlung die Rede ist, so kann es sich dabei um ein Gerät mit einem Trichter und daran angesetzter Hülse handeln. Zweckmäßig ist diese Vorrichtung jedoch eine Patrone in Hülsenform, die beispielsweise in ein Trichtergerät oder ein anderes Gerät, wie ein Dampfbügeleisen, so eingesetzt wird, daß der Benutzer das für den Austausch der Patrone kritische Kammerende sehen kann. Die erfindungsgemäße Filterpatrone kann senkrecht oder waagerecht in ein Gerät eingesetzt werden. Bei Trichtergeräten wird man im allgemeinen die Patrone senkrecht einsetzen, bei Bügeleisen waagerecht in der Weise, daß das kritische Kammerende aus dem Wassertank des Bügeleisens herausragt.

Als stark saure Kationenaustauscher für die erfindungsgemäße Kammer können beispielsweise solche auf Styrolbasis, wie sulfonierte Styrol-Divinylbenzol-Copolymere oder Styrol-Acrylsäure-Copolymere, verwendet werden. Der auf ihnen gebundene Farbindikator kann bekanntermaßen beispielsweise Phenolphthalein sein, wobei Phenolphthalein mit seinem Farbumschlag von farblos nach rot besonders bevorzugt ist und den Ionenaustauscherverbrauch deutlich anzeigt. Als stark basische Anionenaustauscher können beispielsweise solche mit quaternären Ammoniumgruppen eingesetzt werden. Der auf ihnen gebundene Farbindikator kann beispielsweise Thymolphthalein sein.

Vorzugsweise enthält die Hülse einen schwach sauren, die Kammer einen stark sauren Ionenaustauscher.

Die Kammer für den stark sauren oder stark basischen Kationenaustauscher kann im Bereich der Austrittsöffnung der Hülse in unterschiedlicher Weise ausgebildet sein. Beispielsweise kann die Hülse an ihrer einen Stirnseite die Austrittsöffnung haben und in Durchströmungsrichtung vor dieser Stirnseite eine seitliche Flüssigkeitsverbindung zu der Kammer mit dem stark sauren oder stark basischen Kationenaustauscher besitzen. In diesem Fall strömt beispielsweise das zu reinigende Wasser durch den schwach sauren Kationenaustauscher in der Hülse vom Eintrittsende im Bereich der einen Stirnseite der Hülse zur Austrittsöffnung an der anderen Stirnseite der Öffnung, wobei ein kleiner Teil des hierbei entkarbonisierten Wassers durch die seitlichen Öffnungen vor der Austrittsöffnung in die Kammer mit dem stark sauren Kationenaustauscher gelangt. Je nach dem Resthärtegrad dieses Wassers wird nach und nach der stark saure Kationenaustauscher in der Kammer verbraucht, wobei der Farbumschlag erfolgt. Wenn der stark saure Kationenaustauscher in der Kammer vollständig verbraucht ist, was anzeigt, daß auch der schwach saure Kationenaustauscher in der Hülse so weit verbraucht ist, daß er ausgetauscht werden muß, zeigt sich dies in einer vollständigen Färbung, bei Phenolphthalein einer Rotfärbung, des stark sauren Kationenaustauschers in der Kammer. Es genügt also, das vom schwach sauren Kationenaustauscher am weitesten entfernte Ende der Kammer zu beobachten. Wenn dort der Farbumschlag sichtbar wird, ist dies ein Kriterium für das erforderliche Auswechseln des Ionenaustauschers. Im Regelfall wird dann die Patrone, die aus der Hülse und der Kammer besteht, aus dem Gerät herausgenommen, weggeworfen und durch eine frische ersetzt. Das gleiche geht vor sich bei schwach basischen bzw. stark basischen Anionenaustauschern, wobei der Farbumschlag auch farbig nach farblos erfolgen kann. Auch ist einer Kombination von schwach saurem und stark basischem oder schwach basischem mit stark saurem Ionenaustauscher möglich.

Umgekehrt kann die Anordnung der Kammer mit dem beispielsweise stark sauren Kationenaustauscher auch mit der Hülse fluchten. In diesem Fall kann die Hülse im Bereich ihres Austrittsendes in ihrer Seitenwand Austrittsöffnungen für das enthärtete Wasser besitzen, wobei ihre Stirnseite am Austrittsende von einer flüssigkeitsdurchlässigen Einrichtung gebildet wird, an die sich die becherförmige Kammer mit dem stark sauren Kationenaustauscher anschließt. In diesem Fall läuft der Hauptstrom aus der Hülse also seitlich aus, während ein kleiner Teil des enthärteten Wassers in die becherförmige Hülse eintritt und den gleichen Effekt wie in der oben geschilderten Ausführungsform ergibt. In diesem Fall ist wenigstens der Boden der becherförmigen Kammer aus durchsichtigem Material gefertigt, da dieser Boden das von dem schwach sauren Kationenaustauscher der Hülse abgewandte Ende ist, in dessen Bereich die Verfärbung des stark sauren Kationenaustauschers kritisch für den Zeitpunkt des Auswechselns ist.

Wenn eine solche Hülse, beispielsweise bei Bügeleisen, waagerecht in die Wasserbehandlungseinrichtung eingeschoben werden soll, vollzieht sich der Verbrauch des stark sauren Kationenaustauschers in der Kammer schneller im unteren Bereich, da der obere Bereich zeitweilig wasserfrei sein kann. Um einen möglichst gleichmäßigen Farbumschlag über die kritische Endfläche der Kammer, die von dem Ionenaustauscher in der Hülse am weitesten abgewandt ist, zu erzielen, ist es zweckmäßig, in solchen Fällen die flüssigkeitsdurchlässige Trennwand zwischen der Hülse und der Kammer schräg anzuordnen, so daß die Kammerfüllung des stark sauren Kationenaustauschers im unteren Bereich eine größere Dicke als im oberen Bereich hat, so daß die unterschiedliche Geschwindigkeit des Verbrauchs des stark sauren Kationenaustauschers bis zum Sichtende kompensiert wird.

Die flüssigkeitsdurchlässigen, die Ionenaustauscherteilchen zurückhaltenden Einrichtungen können beispielsweise Siebplatten, Lochplatten oder Schlitzplatten, Filtergewebe oder Filtervliese, im Falle des seitlichen Austritts Sieböffnungen, Löcher oder Schlitze in der Seitenwand der Hülse sein. Die spezielle Ausbildung ist dabei für den Erfindungsgedanken nicht kritisch, so lange durch diese Siebplatten, Lochplatten, Schlitzplatten, Gewebe oder Vliese genügend Flüssigkeit hindurchtreten kann und die Ionenaustauscherteilchen vollständig zurückgehalten werden. Eine zweckmäßig ausgebildete Siebplatte und deren Herstellung sind in der DE-PS 2 220 656 beschrieben.

Die Ionenaustauscher liegen vorzugsweise in Teilchenform vor, können aber auch flüssigkeitsdurchlässige Blöcke sein.

In der beigefügten Zeichnung bedeuten
Fig. 1 einen senkrechten Schnitt durch eine perspektivische Darstellung einer Filterpatrone nach der Erfindung,
Fig. 2 eine Vorderansicht, teilweise senkrecht geschnitten, des unteren Endes einer abgewandelten Form einer solchen Filterpatrone für die Verwendung in waagerechter Stellung,
Fig. 3 eine Vorderansicht, teilweise senkrecht geschnitten und im oberen Teil abgebrochen, eines mit Trichter versehenen Filtergerätes und
Fig. 4 einen senkrechten Schnitt durch das untere Ende einer anderen Ausführungsform eines erfindungsgemäßen Filtergerätes eingetaucht in das untere Ende des Auffangbehälters.

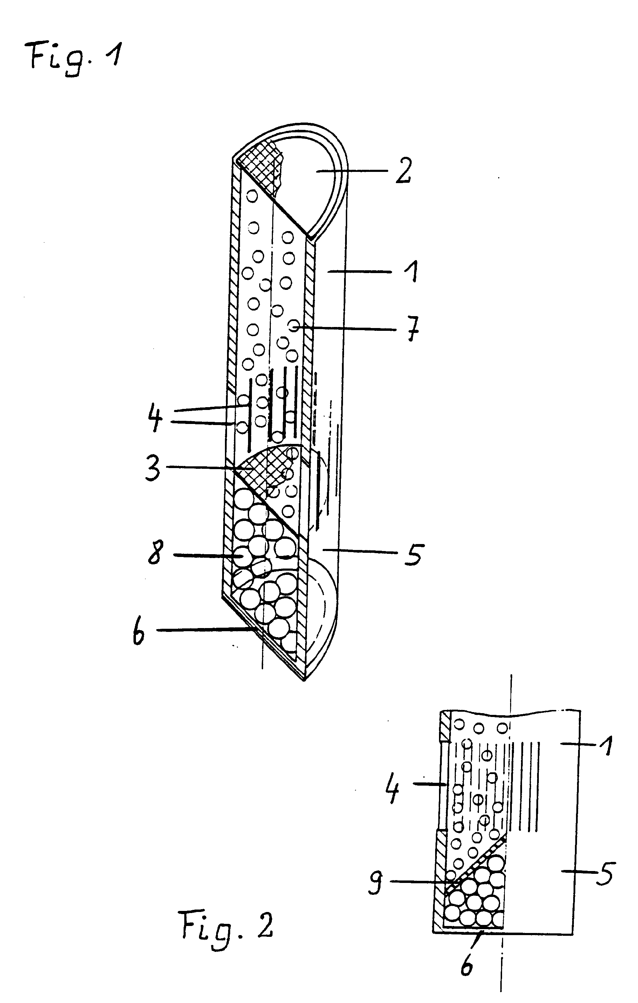

In Fig. 1 besteht die Filterpatrone aus einer zylinderförmigen Hülse 1, die von einer oberen, als Eintrittsöffnung dienenden Siebplatte 2 und einer anderen Siebplatte 3 begrenzt ist. Im Bereich der unteren Siebplatte 3 weist die Zylinderwandung der Hülse 1 parallel zueinander angeordnete flüssigkeitsdurchlässige Schlitze 4 auf. Der von der Hülse 1 und den Siebplatten 2 und 3 begrenzte Raum ist mit einem schwach sauren Kationenaustauscher in Teilchenform gefüllt. Die Schlitze 4 und die Sieböffnungen der Siebplatten 2 und 3 sind so bemessen, daß sie die Teilchen des schwach sauren Kationenaustauschers zurückhalten. Die Teilchen des schwach sauren Kationenaustauschers sind mit dem Bezugszeichen 7 versehen.

Die untere Siebplatte 3 trennt das Innere der Hülse 1 von der becherförmigen Kammer 5 mit geschlossenem Boden 6. Diese Kammer ist mit Teilchen eines stark sauren Ionenaustauschers 8 gefüllt. Die in Fig. 1 erläuterte Filterpatrone ist insbesondere für ein senkrechtes Durchströmen von oben nach unten bestimmt.

Für eine waagerechte Anbringung einer solchen Filterpatrone eignet sich insbesondere die Abwandlung gemäß Fig. 2, die sich von der Ausführungsform in Fig. 1 dadurch unterscheidet, daß die Siebplatte 9 im Gegensatz zur Siebplatte 3 in Fig. 1 schräg angeordnet ist. Bei waagerechtem Einbau wird man die linke Seite der Kammer 5 nach oben nehmen, so daß die Schichtdicke des stark sauren Kationenaustauschers in der Kammer 5 zwischen der Siebplatte 9 und dem Boden 6 im unteren Bereich größer als im oberen Bereich ist. In beiden Ausführungsformen der Fig. 1 und 2 ist wenigstens der Boden 6 der Kammer 5 aus einem durchsichtigen Material gefertigt, so daß ein Farbumschlag im unmittelbar dahinterliegenden Bereich leicht erkennbar ist.

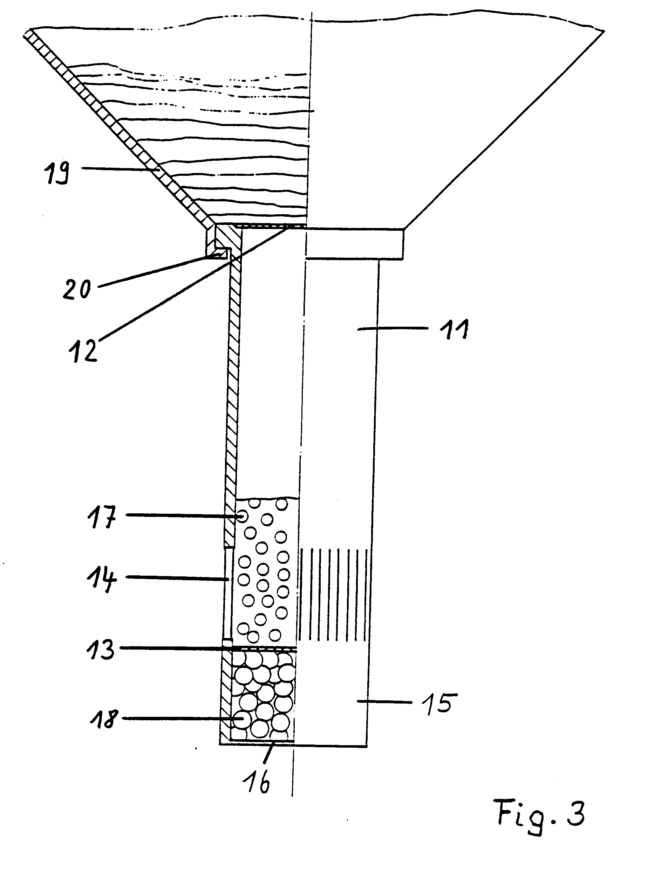

Die Ausführungsform gemäß Fig. 3 ähnelt konstruktiv derjenigen der Fig. 1, doch handelt es sich hier um eine Filterpatrone, die zur Verwendung in einem Trichtergerät bestimmt ist. Hierzu besitzt das obere Ende der Hülse 11 mit der Eintrittsöffnung in Form der Siebplatte 12 einen Ringflansch, der auf einer Schulter 20 am unteren Ende des Trichters 19 ruht, so daß das in den Trichter 19 eingegossene Wasser durch die Siebplatte 12 in die Hülse 11 strömt.

Die Hülse 11 ist mit schwach saurem Kationenaustauscher 17 gefüllt. Die Austrittsöffnung wird wiederum von seitlichen Schlitzen 14 gebildet. Die Kammer 15 mit stark saurem Kationenaustauscher 18 und mit transparentem geschlossenem Boden 16 schließt sich über die Siebplatte 13 an die Hülse 11 an.

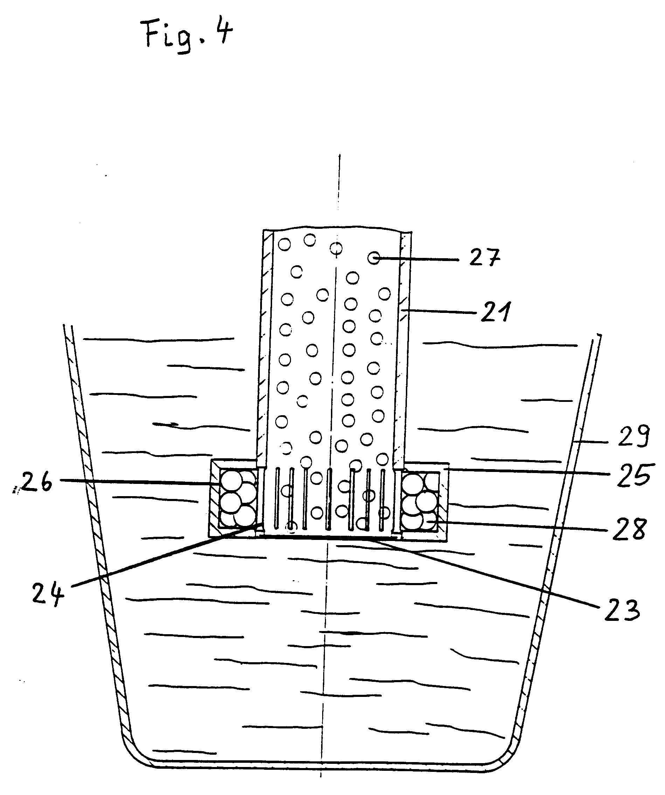

In der in Fig. 4 erläuterten Ausführungsform geht die Hülse 21 bis zur unteren Stirnfläche durch, die von der Siebplatte 23 gebildet wird. Die Hülse 21, von der in der Zeichnung nur das untere Ende gezeigt ist, ist mit schwach saurem Kationenaustauscher 27 gefüllt. Das nach der Enthärtung aus der Siebplatte 23 austretende Wasser gelangt in den Auffangbehälter 29, von dem ebenfalls nur das untere Ende gezeigt ist.

Vor der Siebplatte 23 in Durchströmungsrichtung besitzt die Hülse 21 ringsum laufend eine Reihe von Schlitzen 24, die das Innere der Hülse 21 mit dem Inneren der Ringkammer 25 verbindet, in welcher sich ein stark saurer Kationenaustauscher 28 befindet. In diesem Fall muß wenigstens die Ringwand 26 der Kammer 25 aus durchsichtigem Material bestehen, um den Farbumschlag unmittelbar hinter dieser Ringwand an dem von der Hülse 21 abgewandten Ende der Kammer 25 sichtbar zu machen.

## Patentansprüche

1. Vorrichtung zur Wasserbehandlung mit einer einen schwach sauren und/oder schwach basischen Ionenaustauscher enthaltenden Hülse, deren Eintrittsöffnung im Bereich des einen Endes und deren Austrittsöffnung im Bereich des anderen Endes jeweils von einer flüssigkeitsdurchlässigen, den Ionenaustauscher aber zurückhaltenden Einrichtung gebildet wird, und mit einer im Bereich der Austrittsöffnung (4, 14, 23) der Hülse (1, 11, 21) angeordneten, nur mit dem Inneren der Hülse in flüssigkeitsdurchlässiger Verbindung stehenden Kammer (5, 15, 25), die im Vergleich mit der Menge des schwach sauren und/oder schwach basischen Ionenaustauschers in der Hülse eine geringe Menge eines stark sauren oder stark basischen Ionenaustauschers (8, 18, 28) mit einem daran gebundenen Farbindikator enthält und deren Wandung wenigstens teilweise aus einem durchsichtigen Material besteht.

2. Vorrichtung nach Anspruch 1, **dadurch gekennzeichnet**, daß sie in der Hülse (1, 11, 21) einen schwach sauren und in der Kammer (5, 15, 25) einen stark sauren Ionenaustauscher enthält.

3. Vorrichtung nach Anspruch 1 oder 2, **dadurch gekennzeichnet**, daß sie die Ionenaustauscher in Teilchenform enthält.

4. Vorrichtung nach einem der Ansprüche 1 bis 3, **dadurch gekennzeichnet**, daß die Hülse (21) an ihrer einen Stirnseite (23) die Austrittsöffnung und in der Strömungsrichtung vor dieser eine seitliche Flüssigkeitsverbindung (24) zu der Kammer (25) mit dem stark sauren oder stark basischen Inenaustauscher (28) besitzt.

5. Vorrichtung nach einem der Ansprüche 1 bis 4, **dadurch gekennzeichnet,** daß die Hülse (1, 11) die Austrittsöffnung (1, 14) seitlich vor ihrem einen Ende besitzt und daß sich an dieses Ende die Kammer (5, 15) mit dem stark sauren oder stark basischen Ionenaustauscher (8, 18) anschließt, die von dem Inneren der Hülse (1, 11) durch die flüssigkeitsdurchlässige Einrichtung (3, 13) getrennt ist.

6. Vorrichtung nach einem der Ansprüche 1 bis 5, **dadurch gekennzeichnet,** daß die flüssigkeitsdurchlässigen Einrichtungen Siebplatten, Lochplatten, Schlitzplatten oder Filtergewebe oder -vliese sind.

7. Vorrichtung nach Anspruch 5, **dadurch gekennzeichnet,** daß die flüssigkeitsdurchlässige Einrichtung (9) von einer zur Querschnittsfläche der Hülse (1) schräg angeordneten Siebplatte, Lochplatte oder Schlitzplatte oder einem zur Querschnittsfläche der Hülse (1) schräg angeordnet Filtergewebe oder -vlies gebildet wird.

8. Vorrichtung nach einem der Ansprüche 1 bis 7, **dadurch gekennzeichnet,** daß die Kammer (5, 15, 25) in ihrem von dem Ionenaustauscher (7, 17, 27) in der Hülse (1, 11, 21) abgewandten Bereich (6, 16, 26) aus einem durchsichtigen Material besteht.

9. Vorrichtung nach einem der Ansprüche 1 bis 8, **dadurch gekennzeichnet,** daß der Ionenaustauscher (8, 18, 28) in der Kammer (5, 15, 25) ein solcher auf sulfonierter Styrolbasis oder ein solcher mit quaternären Ammoniumgruppen ist.

10. Vorrichtung nach einem der Ansprüche 1 bis 9, **dadurch gekennzeichnet**, daß der Ionenaustauscher (8, 18, 28) in der Kammer (5, 15, 25) daran gebundenes Phenolphthalein oder Thymolphthalein aufweist.

11. Vorrichtung nach einem der Ansprüche 1 bis 10, **dadurch gekennzeichnet**, daß die Kammer (5, 15, 25) vom Inneren der Hülse (1, 11, 21) durch eine flüssigkeitsdurchlässige, den Ionenaustauscher (7, 17, 27) in der Hülse zurückhaltende Einrichtung (3, 13, 24) getrennt ist.

## Claims

1. A water treatment device comprising, containing a weakly acidic and/or weakly basic ion exchanger, a pod of which the inlet aperture in the region of one end and the outlet orifice in the region of the other end are in each case formed by an arrangement which in each case is permeable to liquids but which retains the ion exchanger, and in the region of the outlet orifice (4, 14, 23) of the pod (1, 11, 21) communicating only with the interior of the pod, a chamber (5, 15, 25) containing, in comparison with the amount of the weakly acidic and/or weakly basic ion exchanger in the pod, a small amount of a strongly acidic of strongly basic ion exchanger (8, 18, 28) with a colour indicator bonded thereon and the walls of which consist at least partially of a transparent material.

2. A device according to Claim 1, **characterized in** that it contains in the pod (1, 11, 21) a weakly acidic ion exchanger and a strongly acidic ion exchanger in the chamber (5, 15, 25).

3. A device according to Claim 1 or 2, **chracterized in** that it contains the ion exchanger in particle form.

4. A device according to one of Claims 1 to 3, **chracterized in** that at its end (23) the pod (21) has the outlet orifice and upstream thereof in the direction of flow a lateral liquids communication (24) with the chamber (25) containing the strongly acidic or strongly basic ion exchanger (28).

5. A device according to one of Claims 1 to 4, **characterized in** that the pod (1, 11) has the outlet orifice (1, 14) preceding its one end and in that there is adjacent this one end the chamber (5, 15) with the strongly acidic or strongly basic ion exchanger (8, 18) which is separated from the interior of the pod (1, 11) by the liquids permeable means (3, 13).

6. A device according to one of Claims 1 to 5, **characterized in** that the liquids permeable means are filter plates, perforated plates, slotted plates or woven filters or filter fleeces.

7. A device according to Claim 5, **characterized in** the liquids permeable means (9) consist of a filter plate, perforated plate or slotted plate disposed obliquely to the cross-sectional area of the pod (1) and a woven or fleece-like filter disposed obliquely to the cross-sectional area of the pod (1).

8. A device according to one of Claims 1 to 7, **characterized in** that the area (6, 16, 26) of teh chamber (5, 15, 25) which is remote from the ion exchanger (7, 17, 27) in the pod (1, 11, 21) consists of a transparent material.

9. A device according to one of Claims 1 to 8, **characterized in** that the ion exchanger (8, 18, 28) in the chamber (5, 15, 25) is one which is based on sulphonated styrene or one which has quaternary ammonium group.

10. A device according to one of Claims 1 to 9, **characterized in** that the ion exchanger (8, 18, 28) in the chamber (5, 15, 25) comprises phenolphthalein or thymolphthalein bonded thereon.

11. A device according to one of Claims 1 to 10, **characterized in** that the chamber (5, 15, 25) is separated from the interior of the sleeve (1, 11, 21) by a liquids permeable arrangement (3, 13, 24) which retains the ion exchanger (7, 17 27) in the pod.

## Revendications

1. Dispositif pour le traitement de l'eau comportant un manchon qui renferme un échangeur d'ions faiblement acide et/ou faiblement basique, et dont l'ouverture d'entrée dans la zone d'une des extrémités et l'ouverture de sortie dans la zone de l'autre extrémité, sont chacune formées par un agencement perméable aux liquides mais retenant l'échangeur d'ions, et comportant également une chambre (5, 15, 25), qui est disposée dans la zone de l'ouverture de sortie (4, 14, 23) du manchon (1, 11, 21), qui n'est en communication qu'avec l'intérieur du manchon par une liaison perméable aux liquides, et qui comparativement à la quantité de l'échangeur d'ions faiblement acide et/ou faiblement basique dans le manchon, renferme une faible quantité d'un échangeur d'ions (8, 18, 28) fortement acide ou fortement basique auquel est combiné un indicateur coloré, la paroi de la chambre étant au moins partiellement réalisée en un matériau transparent.

2. Dispositif selon la revendication 1, caractérisé en ce qu'il contient dans le manchon (1, 11, 21), un échangeur d'ions faiblement acide, et dans la chambre (5, 15, 25), un échangeur d'ions fortement acide.

3. Dispositif selon la revendication 1 ou 2, caractérisé en ce qu'il contient les échangeurs d'ions sous la forme de particules.

4. Dispositif selon l'une des revendications 1 à 3, caractérisé en ce que le manchon (21) présente l'ouverture de sortie sur l'un (23) des ses côtés frontaux, et en amont de celui-ci, une communication latérale d'écoulement de liquide (24) vers la chambre (25) comprenant l'échangeur d'ions (28) fortement acide ou fortement basique.

5. Dispositif selon l'une des revendications 1 à 4, caractérisé en ce que le manchon (1, 11) présente l' ouverture de sortie (1, 14) latéralement par rapport à l'une de ses extrémités, et qu'à cette extrémité se raccorde la chambre (5, 15) qui comprend l'échangeur d'ions (8, 18) fortement acide ou fortement basique, et qui est séparée de l'intérieur du manchon (1, 11) par !'agencement perméable aux liquides (3, 13).

6. Dispositif selon l'une des revendications 1 à 5, caractérisé en ce que les agencements perméables aux liquides sont des plaques de tamis, des plaques perforées, des plaques à fentes ou des tissus ou des non-tissés de filtration.

7. Dispositif selon la revendication 5, caractérisé en ce que l'agencement perméable aux liquides (9) est formé par une plaque de tamis, une plaque perforée ou une plaque à fentes, disposée de manière inclinée par rapport à la surface de la section transversale du manchon (1), ou bien par un tissu ou un non-tissé de filtration disposé de manière incliné par rapport à la surface de la section transversale du manchon.

8. Dispositif selon l'une des revendications 1 à 7, caractérisé en ce que la chambre (5, 15, 25), dans sa zone (6, 16, 26) éloignée de l'échangeur d'ions (7, 17, 27) dans le manchon (1, 11, 21), est réalisée en un matériau transparent.

9. Dispositif selon l'une des revendications 1 à 8, caractérisé en ce que l'échangeur d'ions (8, 18, 28) dans la chambre (5, 15, 25) est un échangeur d'ions à base de styrène sulfoné ou un échangeur d'ions comprenant des fonctions amonium quaternaires.

10. Dispositif selon l'une des revendications 1 à 9, caractérisé en ce que l'échangeur d'ions (8, 18, 28) dans la chambre (5, 15, 25) comporte de la phénolphtaléine ou de la thymolphtaléine qui lui sont liés.

11. Dispositif selon l'une des revendications 1 à 10, caractérisé en ce que la chambre (5, 15, 25) est séparée de l'intérieur du manchon (1, 11, 21) par un agencement (3, 13, 24) perméable au liquides, retenant l'échangeur d'ions (7, 17, 27) dans le manchon.
